# EUROPEAN PATENT SPECIFICATION

(11) **EP 4 386 249 B1**
(45) Date of publication and mention of the grant of the patent: **10.12.2025**
(21) Application number: 22315331.3
(22) Date of filing: 16.12.2022
(51) Int. Cl.: F16L 57/06, F16L 3/26

(54) **FLEXIBLE PROTECTION FOR PIPES**
FLEXIBLER SCHUTZ FÜR ROHRE
PROTECTION FLEXIBLE POUR TUYAUX

(43) Date of publication of application: 19.06.2024
(73) Proprietor: HellermannTyton s.a.s., 78197 Trappes (FR)
(72) Inventor: Pizon, Thomas, 78114 Magny les hameaux (FR); Cherdo, Pascal, 78650 BEYNES (FR)
(74) Representative: Hernandez, Yorck

(56) References cited:
- DE-U1- 20 004 051
- GB-A- 1 403 714
- IT-A1- TV20 080 118
- US-A1- 2012 286 110
- US-A1- 2016 327 187

## Description

### TECHNICAL FIELD

The present disclosure relates to sheaths for protecting pipes, in particular rigid pipes or flexible pipes such as hoses. This is of interest in the automotive industry in particular, or in railway industry.

### BACKGROUND

There are solutions existing in the prior art in order to protect pipes from e.g. sand or little rocks projections in a car environment. The pipes could be installed in the car for conveying e.g. brake fluid.

A first existing solution in the prior art is to provide a channel or a duct around the pipe. The drawback is that the channel or the duct is made out of a rigid material such as plastic, and as a given shape which could not be modified. That is, it is necessary to manufacture one channel for each routing of the pipe, which is expensive and not practical.

A second existing solution in the prior art is to provide flexible or heat-shrinkable tubes. The drawback is also that it is necessary to have plenty of different size of tubes to fit to the external diameter of the pipes. Further, it is necessary to have a much larger diameter than required for the tube, in order to allow to insert the crimped connection or the flanged connection of the pipe from the ends of the protecting tube. If the diameter is slightly higher than the pipe to be connected, there is necessity to install the crimped connection or the flanged connection after installing the protecting tube on the pipe (i.e. nude pipe, without connection), which increases the complexity of manufacturing, requires that the operator mounting the protecting tube be also qualified for crimping the connection or installing the flanges, and/or mix the responsibility of the different suppliers.

A third existing solution in the prior art is disclosed by the document JP2009044783. However, it has similar drawbacks of insertion by the ends and requiring much larger diameters than required by the tube without its crimped connection or flanged connection. Further, if the tube is laterally inserted, this requires the burden of closing all the lids in order to hold the pipe in the protection. Still further, there is no possibility to fold to left or right. IT TV20 080 118 A1 discloses the preamble of claim 1. It discloses a corrugated pipe holder structure, particularly for plasterboard walls, which is characterized in that it consists of a flexible support, selectively associable in a removable way with a wall, having removable hooking and / or coupling means for a corrugated pipe or conduit.

US 2016 327 187 A1, GB 1 403 714 A, US 2012 286 110 A1, and DE 200 04 051 U1 disclose approaches for hanger systems, pipe assemblies, conduit supports, and wear protection for boiler tubes, respectively.

### SUMMARY

Thereby, there is a need to overcome the mentioned drawbacks. The present disclosure concerns a flexible protection sheath according to claim 1.

This allows to provide a protection to the pipe with an easier manufacturing, and an easier installation on the pipe, in particular from the side (or lateral installation), wherein the sheath is maintained in place by the holding arms (also called clamping arms).

Further, the sheath may be installed over pipes, even if they are equipped with flanges or crimped connection.

In other words, the sheath is a cover or a longitudinally opened tube, for protecting the pipe placed inside.

The goal is to allow for a lateral introduction of the pipe, instead of introduction by an end (such as the connecting end), for an easier mounting of the sheath. This is of particular interest when the end of the pipe is not accessible. That is to say, the pipe may be introduced by the longitudinal opening of the longitudinally opened cavity. This is of particular interest for rigid pipes or flexible pipes having connectors such as crimped connectors, generally of higher diameter than the diameter of the pipe itself, thereby not permitting the introduction of said crimped connector from an end of the sheath. That is, this allows to protect preformed pipes having already their connections (flanges, crimped connectors), instead of crimping or mounting the flange after placing the sheath on the pipe.

The sheath is considered to have the longitudinally opened cavity, that is to say a lateral opening (or a top opening), to allow introduction by the side (i.e. longitudinal introduction, avoiding introduction by extremity). Thereby, the sheath can be translated perpendicular to the longitudinal direction of the pipe in order to clamp it via the clamping arms.

This is of particular interest for reparation of existing vehicle, in particular for e.g. pipe of liquid for brakes.

The flexible layer also allows to have small radius when the sheath is bent.

It is to be noted that a layer is a wall, preferably thin, separating an inside and an outside of the sheath.

Longitudinal means in the main direction of the pipe or of the sheath, by comparison and opposition to the terms radial or transversal. The pipe has a main direction or longitudinal direction in which it extends. The sheath can be bent, and thereby the longitudinal direction may be not straight, but this is the direction in which the sheath mainly extends.

In other words, the longitudinal opening of the cavity is an introduction plane or surface of the cavity. As mentioned above, the surface may be curved. That is, the pipe is preferably not introduced by the ends or extremity, but by the side (i.e. by the longitudinal opening).

Further, the system is modular, that is to say it is possible to use one or more sheaths in the longitudinal direction, so as to fit to the length of the pipe to be protected.

Advantageously, the flexible protection sheath further has a stiffening base.

This allows to provide a supporting structure for the sheath, acting like a skeleton. This also allows for pre-formed shapes of the sheath. Advantageously, the stiffening base may be made out of a (rigid) plastic, such as PA, PE or PP, and is preferably thin enough to be flexible.

Advantageously, the stiffening base is connected to, or integral with, the holding arms.

Advantageously, the stiffening base is made in the second material.

Advantageously, the stiffening base extends at least partially in a longitudinal direction.

This allows to increase the structural behavior of the sheath and its rigidity.

Advantageously, the one or more holding arms extend above an opened plane of the longitudinally opened cavity. Advantageously, the one or more holding arms extend radially. This allows to provide an holding feature or a clamping feature of the pipe to be protected.

Advantageously, the flexible layer is made of a plurality of portions.

Advantageously, the flexible layer is preferably integrally formed. Advantageously, the flexible layer has a varying thickness.

Advantageously, the flexible layer has an inner portion (or inner layer) and an outer portion (or an outer layer), and the outer portion has ridges.

Advantageously, the outer layer has openings.

This allows to provide the varying thickness of the sheath and thereby avoiding any crack or rupture to occur when the sheath is placed over the pipe. That is, when the sheath is bent and mounted, the varying thickness helps to limit the stress in the flexible layer, thereby avoiding cracks and the like. Further, this allows the flexible layer to stick or be in contact with the pipe, for holding and protection purpose.

Advantageously, the sheath extends at least partially in a longitudinal direction in a rest position.

Advantageously, the flexible layer extends at least partially in a longitudinal direction in a rest position.

Advantageously, the stiffening base may be curved (that is to say formed or bent, before placing it on the pipe to be protected).

This allows to follow the general shape of the pipe to be protected. It is possible to bent the sheath in basically all directions, so as to form e.g. convex or concave shapes. The bending direction can be defined by the flexible layer and/or by the pre-formed shape of the stiffening base if the sheath has the stiffening base.

Advantageously, the stiffening base and/or the clamping arms are preferably made out of thermoplastic, nylon, polyamide, or resin and the like.

Advantageously, the flexible layer is preferably made out of elastomer, rubber, foam, polypropylene, or polyethylene and the like.

Advantageously, the flexible layer may be arranged to follow the pipe, and to somehow stick to it, so as to avoid any movement of the sheath.

Advantageously, the sheath may have male or female connectors for the connecting ends.

Advantageously, the outer layer may be provided with one or more chevrons or rafters so as to from the varying thickness.

Advantageously, the connecting ends may be provided with through holes. The holes can be used for molding of the connecting ends.

### BRIEF DESCRIPTION OF THE DRAWINGS

Other features, purposes and advantages of the disclosure will become more explicit by means of reading the detailed statement of the nonrestrictive embodiments made with reference to the accompanying drawings
[fig. 1] illustrates a flexible protection sheath according to a first embodiment, in a perspective lateral view,
[fig. 2] illustrates the flexible protection sheath in another perspective lateral view,
[fig. 3] illustrates the flexible protection sheath in a top perspective view,
[fig. 4] illustrates the flexible protection sheath in a detailed view,
[fig. 5] illustrates the flexible protection sheath in a view from an end, with a pipe mounted therein.

### DETAILED DESCRIPTION

The present disclosure relates to a flexible protection sheath 1.

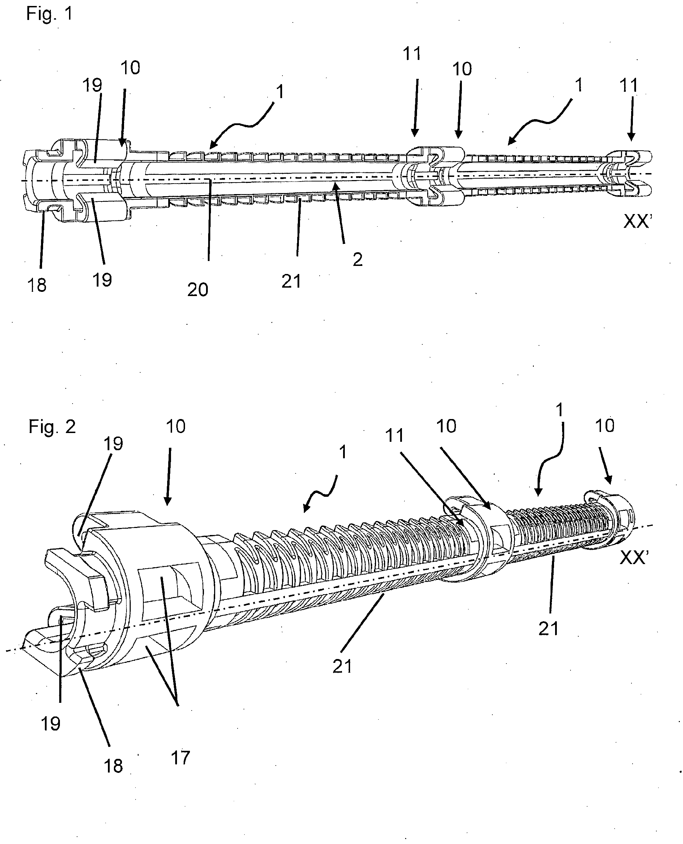

Figure 1 illustrates the flexible protection sheath 1 according to a first embodiment, in a lateral perspective view.

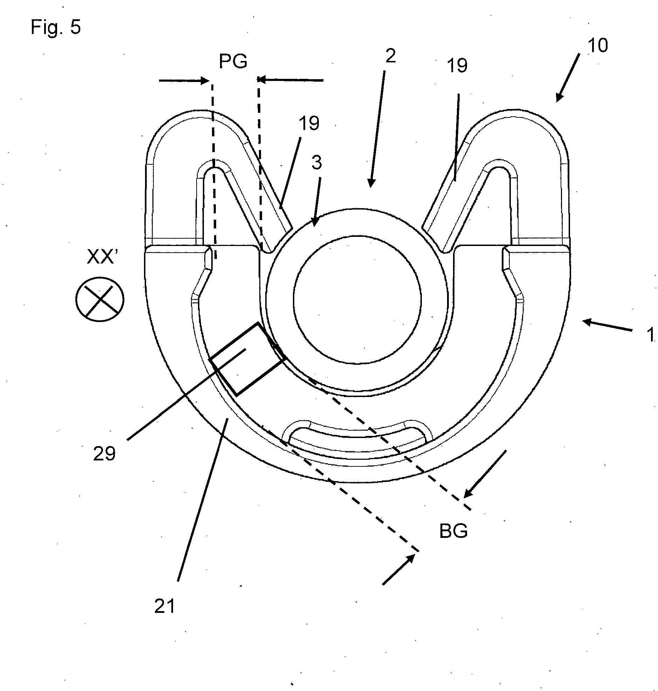

The flexible protection sheath 1 extends in a longitudinal direction XX', and is arranged to receive and protect a pipe 3 mounted therein (not shown in figure 1, shown in figure 5). The pipe 3 also extends along the direction XX', and is preferably rigid, but could also be any type of pipe, including flexible pipe. It is to be noted that the pipe 3 could be replaced by an electrical wire or the like.

The flexible protection sheath 1 may have a rigid base 20, preferably extending along the direction XX'. The rigid base 20 is also called stiffening base 20. The rigid base 20 is preferably arranged on an external diameter of the flexible protection sheath 1, but could also be arranged inside the flexible protection sheath 1. The flexible protection sheath 1 further has a flexible layer 21, forming a protective cover or protective sleeve of the flexible protection sheath 1. The flexible layer 21 is in a general form of a half tube or a half cylinder. It is to be noted that the flexible layer could also be a quarter of a tube, or any other fraction of tube between zero and less than one hundred per cent. The example of a half tube is shown in figure 1 for clarity sake and practical reasons. The flexible layer 21 is arranged to form a cavity 2 to receive the pipe 3 therein. Thereby, the flexible protection sheath 1 can house or hold the pipe 3 therein. The cavity 2 is longitudinally opened.

The structure of the flexible layer 21 will be further detailed below, in particular in reference to figure 2.

The flexible protection sheath 1 further has connecting ends 10, 11 attached to the flexible layer 21 and/or to the rigid base 20. The connecting ends 10, 11 are arranged for connecting one or more flexible protection sheaths 1 together (i.e. longitudinally).

A first connecting end 10 of the connecting ends 10, 11 may be connected to a second end 11 of the connecting ends 10, 11. The first connecting end 10 has connecting ridges 18 (or connecting pins 18) arranged to be connected to corresponding receiving portion (e.g. grooves) of the corresponding second end 11, so as to connect the first connecting end 10 with the second connecting end 11.

The first connecting end 10 and the second connecting end 11 could be either identical or different, provided they are arranged to be connected to each other.

The first connecting end 10 further has one or more pinching arms 19 (two pinching arms 19 in the example of the figure 1), arranged to pinch or clamp the pipe 3, as it will be further explained and illustrated in reference to figure 5. The pinching arms are also called holding arms 19.

The overall length of the two flexible protection sheaths 1 is e.g. 157 mm and the width of the first connecting end 10 is e.g. 11.7 mm, without being limited to said values. Figure 1 illustrates two sheaths 1 attached on the longitudinal direction XX'. It is of course possible to attach more sheaths 1 together, so as to adapt the length as necessary.

Figure 2 illustrates the flexible protection sheath 1 in another perspective lateral view.

The first connecting end 10 further has one or more through holes 17, so that it is possible to inspect the presence and the position of the pipe 3 in the flexible protection sheath 1, and be ensured of the correct pinching of the pipe 3 by the pinching arm 19. The through holes 17 are also useful for molding or manufacturing purpose.

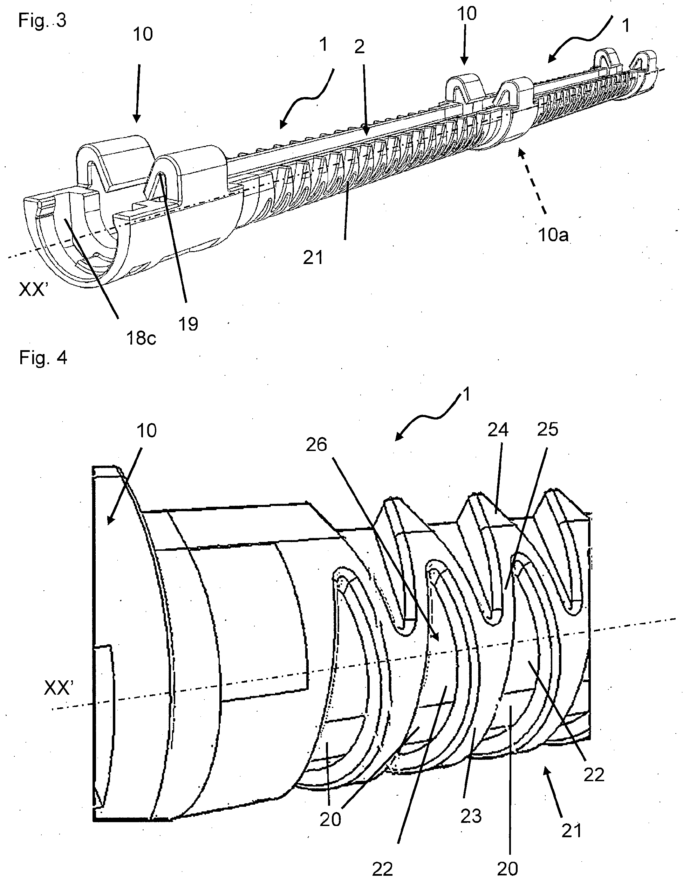

The flexible layer 21 is provided with ridges, as it will be further explained in reference to figure 4.

Figure 3 illustrates the flexible protection sheath 1 in a top perspective view.

The top view is provided to further illustrate the structure of the flexible protection sheath 1.

The first connecting end 10 is shown here with a corresponding groove 18c for matching (or clipping) with connecting ridges 18 (or connecting pins 18). The corresponding groove 18c is an example of corresponding receiving portion for receiving connecting ridges 18. The corresponding groove 18c can be either placed on the first connecting end 10 or on the second connecting end 11, depending on the need of connection.

It is to be noted that, as an alternative, it is possible to provide the connecting ends 10, 11 placed in the middle (see connection 10a), as a non-dismountable connection (either integral or glued). Further, it is possible to connect such sheath 1 to other sheaths 1 at its extremities to adapt the length of the protection.

Figure 4 illustrates the flexible protection sheath 1 in a detailed view.

The flexible protection sheath 1 has the rigid base 20 and the flexible layer 21 as mentioned above, along with connecting ends (here the first connecting end 10 is illustrated).

The flexible layer 21 has a flexible inner portion 22 (or lower layer or inner layer or lower portion) arranged on a first diameter, defining the receiving diameter of the cavity 2. The flexible layer 21 forms a wall separating the inside and the outside of the flexible protection sheath 1.

The flexible layer 21 further has a flexible upper portion 23 (or upper layer or outer layer or outer portion) arranged on a second diameter being larger than the first diameter. The flexible upper portion 23 is provided with ridges 25 so as to increase the rigidity of the flexible layer 21. Thereby, the flexible upper portion 23 and the rigid base 20 allow for a correct positioning of the flexible protection sheath 1, so that the flexible protection sheath 1 can follow and keep a given path. The given path or form may be formed for example by an operator, or a machine, bending the flexible protection sheath 1 to the desired form. It is typically possible to bend the flexible protection sheath 1 so as to form an elbow having a radius of e.g. 1.5 mm (i.e. small radius to match all desired shapes).

The flexible upper portion 23 is provided with ridges 25 as mentioned above, that is to say the flexible upper portion 23 has through openings 26. The through openings 26 may be in the form of a hole, or in the shape of a cat's eye as illustrated in figure 4. The through openings 26 may be of other shapes, such as e.g. oval, ellipse or honeycomb and the like. The through openings 26 may be provided with rounded portions at the end, so as to avoid or limit any cracking from occurring in the flexible layer 21.The through openings 26 are arranged to give flexibility to the flexible upper layer 26, while the ridges 25 of the flexible upper portion 23 are arranged to give rigidity and robustness. The through openings 26 are arranged to expose the flexible inner portion (or lower layer) 22 to the outside.

The ridges 25 may be linked to other ridges 25 by end portion ridges 24. The end portion ridge 24 may be in the form of a triangle, having e.g. an angle of 30 degrees and a pitch of 3 mm. The thickness of a side of the triangle may be 0.8 mm; a length of the flexible layer 21 (and/or the rigid base 20) is e.g. 57 mm, without being limited to said values.

The flexible upper portion 23 and the flexible inner portion (or lower layer) 22 may be integral, or provided in two parts (e.g. glued or fused).

The flexible layer 21 is preferably made out of elastomer, but could be made with other adapted material.

The rigid base 20 is preferably made out of thermoplastic, but could be made with other adapted material. The rigid base 20 may be glued to the flexible layer 21 or fused with it. The rigid base 20 preferably straightly extends in the longitudinal direction XX'. However, other shapes are possible, such as zig zag shapes. It is possible to provide the rigid base 20 from the first connecting end 10 to the second connecting end 11. However, depending on the need, it may be possible to provide the rigid base 20 only on a portion of the flexible protection sheath 1 (such as an half, a third, or any other fraction).

The connecting ends 10, 11 could be made of elastomer, plastic or thermoplastic, or any other adapted material. It is to be noted that the connecting ends 10, 11 are preferably integrally formed.

Thereby, it is possible to provide the flexible protection sheath 1, allowing to form a channel to guide and protect the pipe 3 placed therein. The pipe 3 can thereby be protected from external ingress, such as from sand or little rocks and the like. The flexible protection sheath 1 can be clipped to other flexible protection sheaths 1 if a longer protection is needed. The flexible sheath 1 can also be clipped to a tube having similar corresponding connection. It is thereby possible to provide a standard protection to pipes having a wide variety of diameters and of length. The different thickness of the flexible upper and lower portions 22, 23 allows to have flexibility and protection, while fitting the pipe 3 provided therein.

It is also possible to increase the size of the channel by increasing the diameter of the flexible protection sheath 1 and of the flexible layer 21 (and providing e.g. a three way connecting ends to allow for the introduction of more pipes).

Figure 5 illustrates the flexible protection sheath 1 in a view from an end, with the pipe 3 mounted therein.

The external diameter of the pipe 3 is in contact with the pinching arms 19, so that the pipe 3 is maintained in the flexible protection sheath 1.

A bottom gap BG is provided between the pipe 3 and the flexible lower portion 22. That is, the bottom gap BG could be seen as a margin to increase the diameter of the pipe 3 placed in the flexible protection sheath 1. It is also possible to provide the flexible protection sheath 1 with one or more internal gap feet 29, so as to recover the bottom gap BG and ensure direct contact of the internal gap feet 29 and the pipe 3 (and avoid any movement of the pipe 3 due to the bottom gap BG). Further, it is possible to provide the bottom gap BG to provide a space for the other end of another protection which will be placed in the end, in the inside (that is to say, the ends of the protection will overlap with each other such that one protection is on the outside, and the other protection is on the inside).

The pinching arms 19 extend inwardly and form a pinching gap PG with the flexible protection sheath 1. The pinching arms 19 allow for the introduction of the pipe 3 in the cavity 2, to maintain the pipe 3 therein and to avoid any unvoluntary extraction of the pipe 3 from the cavity 2, in particular due to vibration of the flexible protection sheath 1. Indeed, the flexible protection sheath 1 could be placed in a vibrating area such as a vehicle or a car.

It will be understood that various modifications and/or improvements obvious to the person skilled in the art may be made to the various embodiments of the disclosure described in the present description without departing from the scope of the disclosure defined by the appended claims. The different embodiments can be combined whenever possible or necessary.

## Claims

1. A flexible protection sheath (1) for protecting a pipe (3), the sheath (1) having:
- a flexible layer (21) defining a longitudinally opened cavity (2) arranged to receive the pipe (3),
wherein the flexible layer (21) is made in a first material, the first material having a first rigidity, and has preferably a varying thickness, and
- one or more holding arms (19) arranged to hold the pipe (3) in the cavity (2), **characterized in that** the one or more holding arms (19) are made in a second material, the second material having a second rigidity greater than the first rigidity.

2. The flexible protection sheath (1) according to claim 1, further has a stiffening base (20).

3. The flexible protection sheath (1) according to claim 2, wherein the stiffening base (20) is connected to, or integral with, the holding arms (19).

4. The flexible protection sheath (1) according to claims 2 to 3, wherein the stiffening base (20) is made in the second material.

5. The flexible protection sheath (1) according to claims 2 to 4, wherein the stiffening base (20) extends at least partially in a longitudinal direction (XX').

6. The flexible protection sheath (1) according to claims 1 to 5, wherein the one or more holding arms (19) extend above an opened plane of the longitudinally opened cavity (2).

7. The flexible protection sheath (1) according to claims 1 to 6, wherein the one or more holding arms (19) extend radially.

8. The flexible protection sheath (1) according to claims 1 to 7, wherein the flexible layer (21) is made of a plurality of layers (22, 23).

9. The flexible protection sheath (1) according to claim 8, wherein the flexible layer (21) has an inner layer (22) and an outer layer (23), and the outer layer (23) has ridges (25).

10. The flexible protection sheath (1) according to claim 9, wherein the outer layer has openings (26).

11. The flexible protection sheath (1) according to claims 1 to 10, wherein the sheath (1) extends at least partially in a longitudinal direction (XX') in a rest position.

## Patentansprüche

1. Flexible Schutzhülle (1) zum Schutz einer Leitung (3), wobei die Hülle (1) Folgendes aufweist:
- eine flexible Schicht (21), die einen in Längsrichtung offenen Hohlraum (2) bildet, der zur Aufnahme der Leitung (3) ausgelegt ist,
wobei die flexible Schicht (21) aus einem ersten Material hergestellt ist, wobei das erste Material eine erste Steifigkeit aufweist und vorzugsweise eine variierende Dicke hat, und
- einen oder mehrere Haltearme (19), die so angeordnet sind, dass sie die Leitung (3) in dem Hohlraum (2) halten **dadurch gekennzeichnet, dass**
der eine oder die mehreren Haltearme (19) aus einem zweiten Material hergestellt sind, wobei das zweite Material eine zweite Steifigkeit aufweist, die größer ist als die erste Steifigkeit.

2. Die flexible Schutzhülle (1) gemäß Anspruch 1 weist ferner eine Versteifungsbasis (20) auf.

3. Die flexible Schutzhülle (1) gemäß Anspruch 2, wobei die Versteifungsbasis (20) mit den Haltearmen (19) verbunden oder einstückig mit diesen ausgebildet ist.

4. Die flexible Schutzhülle (1) gemäß den Ansprüchen 2 bis 3, wobei die Versteifungsbasis (20) aus dem zweiten Material hergestellt ist.

5. Die flexible Schutzhülle (1) gemäß den Ansprüchen 2 bis 4, wobei sich die Versteifungsbasis (20) zumindest teilweise in einer Längsrichtung (XX') erstreckt.

6. Die flexible Schutzhülle (1) gemäß den Ansprüchen 1 bis 5, wobei sich der eine oder die mehreren Haltearme (19) über eine geöffnete Ebene des in Längsrichtung geöffneten Hohlraums (2) erstrecken.

7. Die flexible Schutzhülle (1) nach den Ansprüchen 1 bis 6, wobei sich der eine oder die mehreren Haltearme (19) radial erstrecken.

8. Die flexible Schutzhülle (1) gemäß den Ansprüchen 1 bis 7, wobei die flexible Schicht (21) aus mehreren Schichten (22, 23) besteht.

9. Die flexible Schutzhülle (1) gemäß Anspruch 8, wobei die flexible Schicht (21) eine innere Schicht (22) und eine äußere Schicht (23) aufweist und die äußere Schicht (23) Rippen (25) aufweist.

10. Flexible Schutzhülle (1) nach Anspruch 9, wobei die äußere Schicht Öffnungen (26) aufweist.

11. Flexible Schutzhülle (1) nach den Ansprüchen 1 bis 10, wobei sich die Hülle (1) in einer Ruheposition zumindest teilweise in einer Längsrichtung (XX') erstreckt.

## Revendications

1. Gaine de protection flexible (1) destinée à protéger un tuyau (3), la gaine (1) comportant :
- une couche flexible (21) définissant une cavité ouverte longitudinalement (2) agencée pour recevoir le tuyau (3), dans laquelle la couche flexible (21) est réalisée dans un premier matériau, le premier matériau ayant une première rigidité, et ayant de préférence une épaisseur variable, et
- un ou plusieurs bras de maintien (19) agencés pour maintenir le tuyau (3) dans la cavité (2)
**caractérisée en ce que**
le ou les bras de maintien (19) sont réalisés dans un deuxième matériau, le deuxième matériau ayant une deuxième rigidité supérieure à la première rigidité.

2. La gaine de protection flexible (1) selon la revendication 1, comporte en outre une base de renfort (20).

3. La gaine de protection flexible (1) selon la revendication 2, dans laquelle la base de renfort (20) est reliée aux bras de maintien (19) ou fait partie intégrante de ceux-ci.

4. La gaine de protection flexible (1) selon les revendications 2 à 3, dans laquelle la base de renfort (20) est réalisée dans le deuxième matériau.

5. La gaine de protection flexible (1) selon les revendications 2 à 4, dans laquelle la base de renfort (20) s'étend au moins partiellement dans une direction longitudinale (XX').

6. La gaine de protection flexible (1) selon les revendications 1 à 5, dans laquelle le ou les bras de maintien (19) s'étendent au-dessus d'un plan ouvert de la cavité ouverte longitudinalement (2).

7. Gaine de protection flexible (1) selon les revendications 1 à 6, dans laquelle le ou les bras de maintien (19) s'étendent radialement.

8. Gaine de protection flexible (1) selon les revendications 1 à 7, dans laquelle la couche flexible (21) est constituée d'une pluralité de couches (22, 23).

9. Gaine de protection flexible (1) selon la revendication 8, dans laquelle la couche flexible (21) comporte une couche intérieure (22) et une couche extérieure (23), et la couche extérieure (23) comporte des nervures (25).

10. Gaine de protection flexible (1) selon la revendication 9, dans laquelle la couche extérieure comporte des ouvertures (26).

11. Gaine de protection flexible (1) selon les revendications 1 à 10, dans laquelle la gaine (1) s'étend au moins partiellement dans une direction longitudinale (XX') dans une position de repos.
